# EUROPÄISCHE PATENTSCHRIFT

(11) **EP 3 953 674 B1**
(45) Veröffentlichungstag und Bekanntmachung des Hinweises auf die Patenterteilung: **09.07.2025**
(21) Anmeldenummer: 20717642.1
(22) Anmeldetag: 06.04.2020
(51) Int. Cl.: G01M 3/32

(54) **ADAPTERTEIL ZUM VERBINDEN EINES MEDIZINISCHEN HOHLKÖRPERS MIT EINER ZUG-/DRUCK-MESSEINRICHTUNG, PRÜFANORDNUNG, VERFAHREN ZUM PRÜFEN EINER DICHTIGKEIT EINES MEDIZINISCHEN HOHLKÖRPERS, UND VERWENDUNG EINER ZUG-/DRUCK-MESSEINRICHTUNG**
ADAPTER PART FOR CONNECTING A MEDICAL HOLLOW BODY TO A TENSION/COMPRESSION MEASURING DEVICE, TEST ASSEMBLY, METHOD FOR TESTING A TIGHTNESS OF A MEDICAL HOLLOW BODY, AND USE OF A TENSION/COMPRESSION MEASURING DEVICE
ÉLÉMENT ADAPTATEUR POUR RACCORDER UN CORPS CREUX À USAGE MÉDICAL À UN DISPOSITIF DE MESURE DE TENSION/PRESSION, DISPOSITION DE TEST, PROCÉDÉ DE TEST D'ÉTANCHÉITÉ D'UN CORPS CREUX À USAGE MÉDICAL ET UTILISATION D'UN DISPOSITIF DE MESURE DE TENSION/PRESSION

(30) Priorität: 08.04.2019 DE 102019205025
(43) Veröffentlichungstag der Anmeldung: 16.02.2022
(73) Patentinhaber: Vetter Pharma-Fertigung GmbH & Co. KG, 88212 Ravensburg (DE)
(72) Erfinder: HUND, Petra, 88276 Berg (DE)
(74) Vertreter: Kordel, Mattias
(86) Internationale Anmeldenummer: PCT/EP2020/059818
(87) Internationale Veröffentlichungsnummer: WO 2020/207987

(56) Entgegenhaltungen:
- CN-A- 106 813 879
- CN-A- 108 303 224
- CN-A- 109 297 656
- GB-A- 2 078 380
- US-A- 3 132 508

## Beschreibung

Die Erfindung betrifft ein Adapterteil zum Verbinden eines medizinischen Hohlkörpers mit einer Zug-/Druck-Messeinrichtung, eine Prüfanordnung mit einer Zug-/Druck-Messeinrichtung und einem solchen Adapterteil, ein Verfahren zum Prüfen einer Dichtigkeit eines medizinischen Hohlkörpers unter Verwendung eines solchen Adapterteils, und eine Verwendung einer Zug-/Druck-Messeinrichtung zur Prüfung einer Dichtigkeit eines medizinischen Hohlkörpers.

Bei medizinischen Hohlkörpern, insbesondere für den späteren, mit einem Pharmazeutikum vorgefüllten Vertrieb vorgesehenen medizinischen Hohlkörpern, insbesondere Spritzen und Karpulen, aber auch bei Verbindungsstücken, Adaptern oder dergleichen, besteht die Notwendigkeit, die Dichtigkeit zu prüfen. Hierzu existieren genormte Dichtigkeitstests, die insbesondere vorschreiben, dass ein bestimmter Über- oder Unterdruck über eine vorbestimmte Zeit in einem Inneren eines solchen medizinischen Hohlkörpers ohne Leckage gehalten werden muss. Selbstverständlich ist es möglich, zur Durchführung entsprechender Dichtigkeitstests dedizierte, spezifisch hierauf eingerichtete Einrichtungen bereitzustellen; dies ist aber aufwendig und teuer. Auch ist es möglich, solche Dichtigkeitstests mit geringem Automatisierungsgrad quasi von Hand durchzuführen; dies ist aber zeit- und personalaufwendig sowie außerdem ungenau. Es besteht daher ein Bedürfnis, solche Dichtigkeitstests zum einen mittels Einrichtungen/Geräten durchführen zu können, die auch andere Verwendungen erlauben, nach Möglichkeit ohnehin schon im Bereich der Entwicklung und/oder Prüfung von medizinischen Hohlkörpern eingesetzt werden, und zum anderen einen möglichst hohen Automatisierungsgrad solcher Dichtigkeitstest zu erreichen. Verschiedene Beispiele für Mittel zum Testen der Dichtheit von Hohlkörpern sind in den Dokumenten zum Stand der Technik CN109297656A, GB2078380A, CN108303224A, CN106813879A und US3132508A beschrieben.

Der Erfindung liegt die Aufgabe zugrunde, eine Prüfanordnung mit einer Zug-/DruckMesseinrichtung und einem Adapterteil, ein Verfahren zum Prüfen einer Dichtigkeit eines medizinischen Hohlkörpers unter Verwendung einer solchen Prüfanordnung zur Prüfung einer Dichtigkeit eines medizinischen Hohlkörpers zu schaffen, wobei die genannten Nachteile nicht auftreten, und wobei bevorzugt zumindest teilweise mindestens einer der genannten Vorteile verwirklicht wird. Die Aufgabe wird gelöst, indem die vorliegende technische Lehre bereitgestellt wird, insbesondere die Lehre der unabhängigen Ansprüche sowie der in den Unteransprüchen und der Beschreibung offenbarten Ausführungsformen.

Die Aufgabe wird mit einer Prüfanordnung gemäß Anspruch 1 gelöst. Diese Prüfanordnung enthält ein Adapterteil, das eingerichtet ist, um einen medizinischen Hohlkörper mit einer Zug-/Druck-Messeinrichtung zu verbinden, wobei das Adapterteil ein erstes Verbindungsende aufweist, das eingerichtet ist, um das Adapterteil fluiddicht mit einem Inneren eines medizinischen Hohlkörpers zu verbinden. Das Adapterteil weist außerdem ein zweites Verbindungsende auf, wobei das zweite Verbindungsende eine Druckkammer aufweist und eingerichtet ist, um das Adapterteil mit einer Zug-/Druck-Messeinrichtung in Wirkverbindung zu bringen, derart, dass ein Druck in der Druckkammer mittels der Zug-/Druck-Messeinrichtung einstellbar ist. Das Adapterteil weist außerdem einen Hohlkanal auf, der es von der Druckkammer bis zu dem ersten Verbindungsende durchsetzt. Insbesondere ist der Hohlkanal an dem ersten Verbindungsende offen, das heißt der Hohlkanal öffnet sich an dem ersten Verbindungsende zu einer äußeren Umgebung des Adapterteils hin, oder der Hohlkanal mündet in das erste Verbindungsende. Insbesondere ist das Adapterteil an dem ersten Verbindungsende offen, wobei der Hohlkanal von dem ersten Verbindungsende her zugänglich ist. Indem mittels der Zug-/Druck-Messeinrichtung der Druck in der Druckkammer einstellbar ist, wobei der Hohlkanal strömungstechnisch mit der Druckkammer verbunden ist und zugleich an dem ersten Verbindungsende in das Innere eines mit dem Adapterteil fluiddicht verbundenen Hohlkörpers münden kann, ist es im Ergebnis möglich, mittels der Zug-/Druck-Messeinrichtung, insbesondere durch Ansteuern der Zug-/Druck-Messeinrichtung, den Druck im Inneren des medizinischen Hohlkörpers einzustellen. Es besteht dann die Möglichkeit, den Druck in dem Hohlkanal, der Druckkammer, und/oder in dem Inneren des medizinischen Hohlkörpers zu erfassen, insbesondere zu messen. Somit eröffnet das Adapterteil die Möglichkeit, eine Zug-/Druck-Messeinrichtung dazu einzusetzen, Dichtigkeitstests an medizinischen Hohlkörpern durchzuführen. Solche Zug-/Druck-Messeinrichtungen sind im Bereich der Entwicklung/Prüfung von medizinischen Hohlkörpern typischerweise ohnehin vorhanden und werden dort insbesondere verwendet, um beispielsweise Verlagerungskräfte von Stopfen zu prüfen, die im Inneren eines solchen medizinischen Hohlkörpers verlagerbar angeordnet werden. Es kann also für die Durchführung der Dichtigkeitstests auf eine Vorrichtung zurückgegriffen werden, die zum einen auch anderweitig verwendbar und zum anderen typischerweise ohnehin vorhanden ist. Weiterhin ist es möglich, eine solche Zug-/Druck-Messeinrichtung zumindest weitgehend automatisiert zu betreiben, sodass letztlich auch ein Dichtigkeitstest, der mithilfe einer solchen Zug-/Druck-Messeinrichtung durchgeführt wird, zumindest weitgehend automatisiert werden kann.

Unter einem medizinischen Hohlkörper wird hier insbesondere ein Hohlkörper verstanden, der ausgewählt ist aus einer Gruppe, bestehend aus einem Gefäß für pharmazeutische Substanzen, insbesondere für medizinische Wirk- und/oder Hilfsstoffe; einer Spritze; einer Karpule; einem Verbindungsstück, insbesondere einem nadelloses Verbindungsstück, insbesondere einem Luer-Verbindungsstück, insbesondere mit einem Luer-Verbinder oder mit einer Mehrzahl von Luer-Verbindern, insbesondere einem Verbindungsstück mit kleinem Durchmesser gemäß der Normen-Familie ISO 80369, insbesondere DIN EN ISO 80369-7, in der an dem den Zeitrang des vorliegenden Schutzrechts bestimmenden Tag geltenden Fassung, insbesondere DIN EN ISO 80369-7:2017-10; und einem Adapter, insbesondere einem Luer-Adapter, insbesondere mit einem Luer-Verbinder oder mit einer Mehrzahl von Luer-Verbindern, insbesondere einem Infusionsadapter. Insbesondere ist ein medizinischer Hohlkörper ein Teil oder Gefäß, welches einen Hohlraum aufweist, der an zwei Enden durch Verschlüsse und/oder Stopfen verschließbar ist und vorzugsweise bestimmungsgemäß verschlossen wird. Insbesondere ist ein solcher medizinischer Hohlkörper eine Spritze oder eine Karpule.

Insbesondere wird bei einem solchen medizinischen Hohlkörper ein Dichtigkeitstest durchgeführt, indem ein erstes, vorzugsweise distales Ende des medizinischen Hohlkörpers mit einem Verschluss oder Stopfen verschlossen wird, wobei über ein zweites, vorzugsweise proximales, noch offenes Ende ein bestimmter Druck in dem Inneren des Hohlkörpers eingestellt und über eine bestimmte Zeit erfasst wird.

Mit dem ersten, bevorzugt distalen Ende des medizinischen Hohlkörpers kann auch eine Druckmesseinrichtung verbunden werden, um den Druck in dem Inneren des medizinischen Hohlkörpers - und damit zugleich den Druck in dem Hohlkanal - zu erfassen, insbesondere zu messen.

Unter einem distalen Ende wird hier insbesondere ein Ende des medizinischen Hohlkörpers verstanden, welches bestimmungsgemäß, bei einer Verwendung des medizinischen Hohlkörpers, einem Patienten und/oder einer Injektionsstelle zu- und vorzugsweise einem Benutzer des medizinischen Hohlkörpers abgewandt ist. Das andere Ende des medizinischen Hohlkörpers wird als proximales Ende bezeichnet.

Unter einer Zug-/Druck-Messeinrichtung wird insbesondere eine Vorrichtung verstanden, die eingerichtet ist zum Aufbringen von Zug- oder Druckkräften auf Prüfkörper, insbesondere - bevorzugt zusätzlich - zur Messung von Zug- oder Druckkräften an Prüfkörpern. Eine solche Zug-/Druck-Messeinrichtung weist insbesondere einen Standkörper und ein relativ zu dem Standkörper in axialer Richtung verlagerbares Wirkende auf. Das Wirkende ist bevorzugt als an einem Messturm verlagerbarer Messschlitten ausgebildet. Durch Verlagerung des Wirkendes relativ zu einem Prüfkörper können Zug- oder Druckkräfte in den Prüfkörper eingeleitet werden.

Insbesondere wird unter einer Zug-/Druck-Messeinrichtung bevorzugt eine Vorrichtung verstanden, die eingerichtet ist zum Aufbringen von Zug- und Druckkräften auf Prüfkörper, insbesondere - bevorzugt zusätzlich - zur Messung von Zug- und Druckkräften an Prüfkörpern.

Insbesondere ist die Zug-/Druck-Messeinrichtung bevorzugt eingerichtet, um mechanische Zug- und/oder Druckkräfte auf Prüfkörper aufzubringen, sowie vorzugsweise um mechanische Zug- und/oder Druckkräfte an Prüfkörpern zu messen.

Unter einer fluiddichten Verbindung des Adapterteils mit dem Inneren des medizinischen Hohlkörpers wird insbesondere verstanden, dass das Adapterteil über das erste Verbindungsende derart mit dem medizinischen Hohlkörper verbunden wird, dass eine Druckeinstellung in dem Inneren des medizinischen Hohlkörpers über das Adapterteil ohne Leckage im Bereich der Verbindung des ersten Wirkendes mit dem medizinischen Hohlkörper möglich ist. Dabei ist es ausreichend, wenn die Verbindung des Adapterteils mit dem medizinischen Hohlkörper derart ausgestaltet ist, dass bei solchen Drücken, wie sie für die vorgesehenen Dichtigkeitstests nötig oder vorgeschrieben sind, keine oder zumindest keine den Dichtigkeitstest beeinträchtigende Leckage auftritt. Es ist möglich, jedoch nicht zwingend erforderlich, dass die Verbindung auch darüber hinaus fluiddicht, also auch bei höheren Druckdifferenzen leckagefrei ausgestaltet ist.

Bevorzugt weist das erste Verbindungsende eine Dichteinrichtung zur fluiddichten Verbindung mit dem medizinischen Hohlkörper auf. Die Dichteinrichtung weist in bevorzugter Ausgestaltung wenigstens ein Dichtelement, insbesondere wenigstens einen Dichtring, besonders bevorzugt zwei Dichtelemente, insbesondere zwei - vorzugsweise voneinander beabstandet angeordnete - Dichtringe auf. Die Dichteinrichtung ist bevorzugt an einer äußeren Umfangswandung des ersten Verbindungsendes angeordnet und wirkt in montiertem Zustand mit einer Innenwandung des Hohlkörpers dichtend zusammen.

Es ist auch eine formschlüssige Verbindung der ersten Verbindungsendes mit dem medizinischen Hohlkörper möglich, beispielsweise über einen Luer-Konus mit Gewinde.

Mittels der Zug-/Druck-Messeinrichtung ist ein Druck in der Druckkammer insbesondere einstellbar, wenn das erste Verbindungsende mit dem medizinischen Hohlkörper fluiddicht verbunden und zugleich das zweite Verbindungsende mit der Zug-/Druck-Messeinrichtung wirkverbunden ist. Zum Druckaufbau wird bevorzugt ein geeignetes Fluid verwendet, insbesondere ein Gas oder eine Flüssigkeit, beispielsweise Luft, Stickstoff, Kohlendioxid, ein Edelgas, Wasser, ein pharmazeutisches Öl oder Fett oder dergleichen.

Mittels der Zug-/Druck-Messeinrichtung kann in der Druckkammer insbesondere - relativ zu einem Umgebungsdruck, insbesondere Normaldruck, insbesondere 1013 mbar - ein Überdruck, beispielsweise von ca. 300 kPa, oder ein Unterdruck, beispielsweise von 40 kPa, eingestellt werden. Somit können sowohl Dichtigkeitstests durchgeführt werden, die das Einstellen eines Überdrucks erfordern, als auch solche Dichtigkeitstests, die das Einstellen eines Unterdrucks erfordern.

Gemäß einer Weiterbildung der Erfindung ist vorgesehen, dass das Adapterteil einen Druckmesskanal aufweist, der zwischen dem ersten Verbindungsende und dem zweiten Verbindungsende aus dem Hohlkanal oder der Druckkammer abzweigt. Der Druckmesskanal steht somit zwischen dem ersten Verbindungsende und dem zweiten Verbindungsende, insbesondere zwischen dem ersten Verbindungsende und der Druckkammer, in strömungstechnischer Verbindung mit dem Hohlkanal und der Druckkammer. Insbesondere zweigt der Druckmesskanal zwischen dem ersten Verbindungsende und der Druckkammer aus dem Hohlkanal ab. Insbesondere über den Druckmesskanal besteht dann in besonders einfacher Weise die Möglichkeit, den Druck in dem Hohlkanal, der Druckkammer, und damit zugleich den Druck in dem Inneren des medizinischen Hohlkörpers zu erfassen, insbesondere zu messen.

Gemäß einer Weiterbildung der Erfindung ist vorgesehen, dass der Druckmesskanal eingerichtet ist, um eine Druckmesseinrichtung an dem Druckmesskanal anzuordnen. Somit ist es vorteilhaft - insbesondere in einfacher Weise - möglich, eine Druckmesseinrichtung mit dem Druckmesskanal zu verbinden, insbesondere strömungstechnisch zu verbinden, um den Druck in dem Druckmesskanal und damit zugleich dem Hohlkanal, der Druckkammer und dem medizinischen Hohlkörper zu bestimmen. Bevorzugt weist der Druckmesskanal ein Gewinde auf oder ist dem Druckmesskanal ein Gewinde zugeordnet, wobei die Druckmesseinrichtung mit dem Gewinde verschraubt werden kann. Dies stellt eine besonders einfache und leicht herzustellende Verbindung der Druckmesseinrichtung mit dem Druckmesskanal dar.

Alternativ oder zusätzlich ist bevorzugt vorgesehen, dass eine Druckmesseinrichtung, insbesondere ein Manometer, mit dem Druckmesskanal wirkverbunden ist, um den Druck in dem Druckmesskanal zu messen. Auf diese Weise kann zugleich der Druck in dem Hohlkanal, der Druckkammer, sowie in dem medizinischen Hohlkörper bestimmt werden.

Gemäß einer Weiterbildung der Erfindung ist vorgesehen, dass in der Druckkammer ein Kolben verlagerbar angeordnet ist, sodass ein Volumen der Druckkammer durch Verlagerung des Kolbens veränderbar ist. Auf diese Weise kann der Druck in der Druckkammer sehr einfach eingestellt werden, indem der Kolben verlagert wird. Insbesondere ist der Kolben in der Druckkammer linear verlagerbar angeordnet, vorzugsweise in axialer Richtung. Der Kolben liegt vorzugsweise dicht an einer inneren Umfangsfläche der Druckkammer an, sodass bei Verlagerung des Kolbens in der Druckkammer der Druck in derselben verändert wird.

Eine Axialrichtung ist bevorzugt insbesondere eine Richtung, die sich parallel zur oder in Richtung der Längsachse des Hohlkanals erstreckt. Vorzugsweise fluchtet die Längsachse des Hohlkanals in zusammengebautem Zustand mit der Längsachse des medizinischen Hohlkörpers. Vorzugsweise fluchtet die Längsachse des Hohlkanals in zusammengebautem Zustand mit der Verlagerungsachse des Wirkendes der Zug-/Druck-Messeinrichtung. Die Axialrichtung erstreckt sich somit in besonders bevorzugter Ausgestaltung sowohl entlang der Längsachse des Hohlkanals, als auch entlang der Längsachse des medizinischen Hohlkörpers, als auch entlang der Verlagerungsrichtung des Wirkendes der Zug-/Druck-Messeinrichtung. Eine radiale Richtung steht senkrecht auf der Axialrichtung. Eine Umfangsrichtung umgreift die Axialrichtung konzentrisch.

Gemäß einer Weiterbildung der Erfindung ist vorgesehen, dass das Adapterteil einen Kolben aufweist, der eingerichtet ist, um in der Druckkammer verlagerbar angeordnet zu werden. Der Kolben kann also zumindest in nicht zusammengebautem Zustand separat von der Druckkammer vorgesehen sein und bedarfsweise in dieser verlagerbar angeordnet zu werden, um das Volumen der Druckkammer durch Verlagerung des Kolbens zu verändern, wobei hierdurch zugleich der Druck in der Druckkammer verändert wird. Insbesondere der Kolben ist bevorzugt mit dem Wirkende der Zug-/Druck-Messeinrichtung wirkverbindbar.

Es ist aber auch möglich, dass der Kolben unverlierbar in der Druckkammer gehalten ist.

Gemäß einer Weiterbildung der Erfindung ist vorgesehen, dass der Kolben eine Kolbenscheibe aufweist. Alternativ ist es möglich, dass der Kolben als Kolbenscheibe ausgebildet ist. Letzteres stellt eine besonders einfache Ausgestaltung des Kolbens dar. Dabei ist es insbesondere möglich, dass das Wirkende der Zug-/Druckmaschine auf den als Kolbenscheibe ausgebildeten Kolben wirkt, um diesen in der Druckkammer zu verlagern.

Weist der Kolben eine Kolbenscheibe auf, weist er bevorzugt außerdem eine Kolbenstange auf, die mit der Kolbenscheibe verbunden, insbesondere einstückig mit der Kolbenscheibe ausgebildet ist. Die Kolbenstange ragt bevorzugt bereichsweise aus der Druckkammer heraus, um mit dem Wirkende der Zugdruckmesseinrichtung verbunden zu werden. Durchragt die Kolbenstange dabei eine insbesondere axiale Öffnung, insbesondere Bohrung, deren lichter Durchmesser kleiner ist als der Durchmesser der Kolbenscheibe, ist der Kolben unverlierbar in der Druckkammer angeordnet, wobei zugleich der außerhalb der Druckkammer angeordnete Teil der Kolbenstange mit dem Wirkende der Zug-/Druck-Messeinrichtung verbunden werden kann.

Alternativ oder zusätzlich weist der Kolben ein Koppelteil auf, das eingerichtet ist, um mit dem Wirkende der Zug-/Druck-Messeinrichtung mechanisch gekoppelt zu werden. Insbesondere ist es möglich, dass die Kolbenstange das Koppelteil aufweist. Ist der Kolben mit dem Koppelteil mechanisch mit dem Wirkende gekoppelt, ist er gemeinsam mit dem Wirkende verlagerbar.

Vorzugsweise ist an dem Koppelteil des Kolbens eine Sicherungsbohrung, vorzugsweise eine Querbohrung, die sich quer, insbesondere senkrecht zu der Axialrichtung erstreckt, zur Durchführung eines Sicherungsstifts angeordnet. Somit kann der Koppelschaft in besonders sicherer Weise mit dem Wirkende der Zug-/Druck-Messeinrichtung verbunden werden, indem ein Sicherungsstift durch die Sicherungsbohrung hindurchgesteckt wird. Das Wirkende der Zug-/Druck-Messeinrichtung weist bevorzugt eine Sicherungsaufnahme für den Sicherungsstift auf, sodass dieser in montiertem Zustand einerseits die Sicherungsaufnahme und andererseits die Sicherungsbohrung durchgreift und so den Kolben sicher an dem Wirkende hält.

Gemäß einer bevorzugten Ausgestaltung ist das Koppelteil als Koppelschaft ausgebildet. Unter einem Koppelschaft wird dabei insbesondere ein Schaft des Kolbens verstanden, der spezifisch zur mechanischen Kopplung mit dem Wirkende eingerichtet ist. Insbesondere ist die Kolbenstange bevorzugt als Koppelschaft ausgebildet.

Gemäß einer Weiterbildung der Erfindung ist vorgesehen, dass der Druckkammer und/oder dem Kolben eine Skala zugeordnet ist, von der ein momentaner Druck in der Druckkammer abhängig von einer momentanen Lage, insbesondere von einer momentanen axialen Lage, des Kolbens in der Druckkammer ablesbar ist. Dies ermöglicht in sehr einfacher Weise eine zumindest grobe Abschätzung des Drucks in der Druckkammer, sowie eine Plausibilitätsprüfung, ob der letztlich im Rahmen des Dichtigkeitstests eingestellte/überwachte Druck korrekt ist.

Die Skala erlaubt es dabei bevorzugt, den Druck in Abhängigkeit von der momentanen Lage des Kolbens relativ zu einer Startposition des Kolbens auf der Skala abzulesen. Es wird also insbesondere bevorzugt zunächst geprüft, von welcher Position der Kolben unter Umgebungsdruck in der Druckkammer auf der Skala startet, wenn er initial durch die Zug-/Druck-Messeinrichtung verlagert wird, um den Druck in der Druckkammer von dem Umgebungsdruck abweichend zu verändern. Die Zielposition des Kolbens auf der Skala, welcher dieser nach der Verlagerung erreicht, gibt dann relativ zu der Startposition ein Maß für die Druckdifferenz zwischen dem erreichten Druck und dem Startdruck, mithin dem Umgebungsdruck, an.

Es versteht sich, dass die Änderung des Drucks bei einer axialen Verlagerung des Kolbens insbesondere abhängig ist von dem Volumen des medizinischen Hohlkörpers sowie des Hohlkanals und der Druckkammer. Dabei variiert typischerweise insbesondere das Volumen des medizinischen Hohlkörpers, während das Volumen des Hohlkanals und der Druckkammer für ein bestimmtes Adapterteil vorgegeben ist. Es ist möglich, dass an dem Adapterteil verschiedene Skalen für verschiedene zu prüfende medizinische Hohlkörper vorgesehen sind. Alternativ ist es möglich, dass eine Umrechentabelle vorgesehen ist, welche das Volumen des momentan überprüften medizinischen Hohlkörpers berücksichtigt. Alternativ ist es möglich, dass verschiedene Adapterteile - insbesondere mit verschiedenen Skalen - für verschiedene medizinische Hohlkörper bereitgestellt werden.

Die Skala ist bevorzugt an einer Wandung der Druckkammer angeordnet. Besonders bevorzugt ist die Wandung der Druckkammer zumindest im Bereich der Skala transparent, sodass die Position des Kolbens relativ zu der Skala durch die Wandung hindurch beobachtet werden kann. Ist die Skala dem Kolben zugeordnet, weist die Wandung der Druckkammer bevorzugt eine Ablesemarkierung auf.

Die Prüfanordnung weist weiterhin eine Zug-/DruckMesseinrichtung auf.

Die Zug-/Druck-Messeinrichtung weist einen Standkörper und ein relativ zu dem Standkörper axial verlagerbares Wirkende, insbesondere ein axial verlagerbares Messelement, auf. Die Zug-/Druck-Messeinrichtung ist insbesondere so eingerichtet, wie dies zuvor bereits in Zusammenhang mit dem Adapterteil erläutert wurde. Die Prüfanordnung weist außerdem ein erfindungsgemäßes Adapterteil oder ein Adapterteil nach einem der zuvor beschriebenen Ausführungsbeispiele auf. Das zweite Verbindungsende des Adapterteils ist mit dem Wirkende derart wirkverbunden, dass ein Druck in der Druckkammer des Adapterteils durch axiales Verlagern des Wirkendes relativ zu der Druckkammer einstellbar ist. In Zusammenhang mit der Prüfanordnung ergeben sich insbesondere die Vorteile, die bereits in Zusammenhang mit dem Adapterteil erläutert wurden.

Die Zug-/Druck-Messeinrichtung weist bevorzugt einen Antrieb, insbesondere einen maschinellen oder motorischen Antrieb, zur Verlagerung des Wirkendes auf. In besonders bevorzugter Ausgestaltung ist der Antrieb als Elektromotor - gegebenenfalls unter Zwischenschaltung eines Getriebes - ausgebildet. Der Antrieb kann insbesondere dem Standkörper zugeordnet oder in dem Standkörper angeordnet sein.

Das Wirkende ist bevorzugt an einem Messturm des Standkörpers axial verlagerbar. Es ist möglich, dass zumindest Teile des Antriebs in dem Messturm angeordnet oder in dem Messturm integriert sind. Das Wirkende ist insbesondere relativ zu dem Messturm und an dem Messturm axial verlagerbar.

Gemäß einer Weiterbildung der Erfindung ist vorgesehen, dass der Standkörper ein Befestigungsteil zum Festlegen des Adapterteils relativ zu dem Standkörper aufweist. Insbesondere ist das Befestigungsteil eingerichtet, um einerseits an dem Standkörper befestigt und andererseits lagefest mit dem Adapterteil verbunden zu werden, sodass letztlich das Adapterteil vermittelt über das Befestigungsteil lagefest relativ zu dem Standkörper angeordnet ist.

Der Standkörper weist außerdem bevorzugt ein Prüfkörperbefestigungsteil zum Festlegen des medizinischen Hohlkörpers relativ zu dem Standkörper auf. Dabei ist das Prüfkörperbefestigungsteil vorzugsweise einerseits mit dem Standkörper lagefest verbindbar, wobei andererseits der medizinische Hohlkörper lagefest mit dem Prüfkörperbefestigungsteil verbindbar ist, sodass letztlich der medizinische Hohlkörper vermittelt über das Prüfkörperbefestigungsteil lagefest relativ zu dem Standkörper angeordnet ist.

Gemäß einer Weiterbildung der Erfindung ist vorgesehen, dass das Wirkende, insbesondere das Messelement, mit dem Kolben, insbesondere der Kolbenscheibe, des Adapterteils zug- und/oder druckübertragend verbunden ist. Dabei kann eine druckübertragende Verbindung in besonders einfacher Weise dadurch zustande kommen, dass das Wirkende auf die Kolbenscheibe drückt, ohne im Übrigen mit dieser mechanisch verbunden zu sein. Es ist aber auch möglich, dass das Wirkende mit der Kolbenscheibe zug- und druckübertragend verbunden, beispielsweise mit der Kolbenscheibe verrastet oder in anderer Weise mit dieser mechanisch verbunden ist.

Alternativ ist bevorzugt vorgesehen, dass das Wirkende mit einem Koppelteil des Kolbens - insbesondere starr - mechanisch gekoppelt ist. Bei dem Koppelteil kann es sich insbesondere um einen Koppelschaft handeln. Dabei ist es möglich, dass das Wirkende mit dem Koppelteil über einen Sicherungsstift gesichert verbunden ist, wobei der Sicherungsstift bevorzugt eine Sicherungsbohrung an dem Koppelteil sowie eine Sicherungsaufnahme an dem Wirkende durchgreift.

Alternativ ist bevorzugt vorgesehen, dass das Wirkende selbst als Kolben in der Druckkammer verlagerbar angeordnet ist. Insbesondere ist es möglich, dass die Maße der Druckkammer, insbesondere deren Durchmesser, so auf das Wirkende abgestimmt sind, dass das Wirkende selbst als Kolben verwendet und direkt - ohne weitere Kopplung mit einem separaten Kolben - in der Druckkammer verlagert werden kann, um den Druck in der Druckkammer zu verändern. Dies stellt eine besonders einfache Ausgestaltung mit besonders wenigen Teilen dar.

Gemäß einer Weiterbildung der Erfindung ist vorgesehen, dass die Zug-/Druck-Messeinrichtung eine Steuereinrichtung aufweist, die eingerichtet ist, um mit einer Druckmesseinrichtung, insbesondere einem Manometer, wirkverbunden zu werden und einen Druck in dem Hohlkanal, insbesondere in dem Druckmesskanal, zu erfassen, vorzugsweise zeitabhängig zu erfassen, und vorzugsweise auszuwerten. Dies ermöglicht eine zumindest teilautomatisierte Durchführung eines Dichtigkeitstests, wobei die Erfassung und vorzugsweise Auswertung des Drucks in dem Hohlkanal, insbesondere in dem Druckmesskanal, durch die Steuereinrichtung der Zug-/DruckMesseinrichtung übernommen werden kann.

Bevorzugt ist das Wirkende durch die Steuereinrichtung in Abhängigkeit von dem erfassten Druck verlagerbar. Dies ermöglicht eine automatische Einstellung des Drucks, insbesondere auf einen Vorgabe- oder Sollwert.

Gemäß einer Weiterbildung der Erfindung ist vorgesehen, dass die Steuereinrichtung eingerichtet ist, um eine Dichtigkeitsprüfung oder einen Dichtigkeitstest an einem medizinischen Hohlkörper automatisiert durchzuführen. Dies ermöglicht eine besonders einfache, zeit- und personalsparende Ausführung des Dichtigkeitstests. Vorzugsweise wird dabei zunächst der Druck in der Druckkammer automatisch eingestellt, sodann während einer vorbestimmten Zeitdauer erfasst, und schließlich der während der vorbestimmten Zeitdauer erfasste Druck, insbesondere Druckverlauf, ausgewertet.

Alternativ ist es möglich, dass die Steuereinrichtung eingerichtet ist, um den Druck in dem Hohlkanal, insbesondere in dem Druckmesskanal, zu regeln, wobei insbesondere das Wirkende in Abhängigkeit von dem erfassten Druck derart verlagert wird, dass der Druck in dem Hohlkanal, insbesondere in dem Druckmesskanal, konstant gehalten wird. Es kann dann abhängig von während einer vorbestimmten Zeitdauer erfolgten Regeleingriffen, insbesondere abhängig von einem Verlagerungsweg des Wirkendes, auf eine Dichtigkeit oder Leckage des medizinischen Hohlkörpers geschlossen werden.

Die Aufgabe wird auch gelöst, indem ein Verfahren gemäß Anspruch 10 zum Prüfen einer Dichtigkeit eines medizinischen Hohlkörpers mit einer Prüfanordnung nach einem der Ansprüche 1 bis 9 geschaffen wird, wobei ein medizinischer Hohlkörper mit einer Zug-/Druck-Messeinrichtung über ein erfindungsgemäßes Adapterteil oder ein Adapterteil nach einem der zuvor beschriebenen Ausführungsbeispiele verbunden wird. Der medizinische Hohlkörper ist dabei insbesondere an seinem dem Adapterteil abgewandten Ende geschlossen, insbesondere mittels eines Stopfens oder Verschlusses. Letztlich ermöglicht das Verfahren eine Prüfung der Dichtigkeit des Stopfens oder Verschlusses an dem Ende des medizinischen Hohlkörpers, welches dem Adapterteil abgewandt ist. Es wird ein bestimmter Druck in dem Inneren des medizinischen Hohlkörpers durch Verlagern des Wirkendes der Zug-/DruckMesseinrichtung eingestellt. Dabei kann bevorzugt ein Überdruck oder ein Unterdruck eingestellt werden, insbesondere abhängig von dem durchzuführenden Dichtigkeitstest. Das Wirkende wird insbesondere relativ zu dem Adapterteil und relativ zu dem medizinischen Hohlkörper verlagert. Ein momentaner Druck in dem Inneren des medizinischen Hohlkörpers wird über eine bestimmte Prüfzeit erfasst. In Zusammenhang mit dem Verfahren verwirklichen sich insbesondere die bereits zuvor beschriebenen Vorteile.

Bevorzugt wird das Verfahren in Übereinstimmung mit den Vorgaben der Norm DIN EN ISO 80369-20:2015 durchgeführt.

Bevorzugt wird der momentane Druck in dem Inneren während der bestimmten Prüfzeit durch die Zug-/Druck-Messeinrichtung erfasst. Vorzugsweise wird der erfasste momentane Druck - insbesondere als zeitlicher Druckverlauf - ausgewertet. Vorzugsweise erfolgt die Auswertung durch die Zug-/Druck-Messeinrichtung, insbesondere durch die Steuereinrichtung der Zug-/Druck-Messeinrichtung.

Gemäß einer Weiterbildung der Erfindung ist vorgesehen, dass das Wirkende nach dem Einstellen des bestimmten Drucks und während der bestimmten Prüfzeit stillgehalten wird. In diesem Fall wird initial ein bestimmter Druck eingestellt, wobei dann geprüft wird, ob sich der Druck während der bestimmten Prüfzeit stärker ändert, als dies gemäß einer Sollvorgabe erlaubt ist. Bleibt dabei die Druckänderung innerhalb der Sollvorgabe, gilt der geprüfte medizinische Hohlkörper als dicht. Übersteigt die Druckänderung die Sollvorgabe, wird der überprüfte medizinische Hohlkörper als undicht gewertet. Das Wirkende wird insbesondere relativ zu dem Adapterteil und dem medizinischen Hohlkörper ortsfest gehalten.

Alternativ ist es möglich, dass der Druck in dem medizinischen Hohlkörper während der bestimmten Prüfzeit auf den bestimmten Druck als Sollwert geregelt wird. Dabei werden bevorzugt während der bestimmten Prüfzeit Regeleingriffe, insbesondere Verlagerungen des Wirkendes, ausgewertet, und anhand dieser Regeleingriffe und/oder Verlagerungen des Wirkendes wird schließlich auf die Dichtigkeit des medizinischen Hohlkörpers geschlossen. Überschreiten dabei die Regeleingriffe und/oder die Verlagerungen des Wirkendes eine Sollvorgabe, gilt der medizinische Hohlkörper als undicht, andernfalls wird er als dicht gewertet.

Bevorzugt wird das Verfahren durch die Zug-/Druck-Messeinrichtung automatisch durchgeführt. Dabei bedarf es insbesondere höchstens eines manuellen Verbindens des medizinischen Hohlkörpers mit der Zug-/Druck-Messeinrichtung über das Adapterteil. Im Übrigen kann der bestimmte Druck durch die Zug-/Druck-Messeinrichtung automatisch eingestellt werden, und der momentane Druck in dem Inneren des medizinischen Hohlkörpers kann über die bestimmte Prüfzeit automatisch erfasst und vorzugsweise ausgewertet werden. Entsprechend kann auch eine automatische Nachregelung des bestimmten Drucks sowie eine Auswertung der erforderlichen Regeleingriffe und/oder Verlagerungen des Wirkendes erfolgen.

Gemäß einer Weiterbildung der Erfindung ist vorgesehen, dass der medizinische Hohlkörper geprüft wird, bevor ein medizinischer Stopfen in dem medizinischen Hohlkörper angeordnet wird. Insbesondere wird der medizinische Hohlkörper geprüft, bevor ein Mittelstopfen - für einen Zweikammer-Hohlkörper - oder ein Endstopfen in einer Spritze oder Karpule angeordnet wird/werden. Der medizinische Hohlkörper ist zum Zeitpunkt der Prüfung somit frei von einem in dem Inneren des medizinischen Hohlkörpers verlagerbaren Stopfen, insbesondere frei von einem Mittel- und/oder Endstopfen.

Die Dichtigkeitsprüfung des medizinischen Hohlkörpers kann insbesondere vor einer Silikonisierung einen Innenwandung des medizinischen Hohlkörpers, aber auch nach der Silikonisierung erfolgen. Die Prüfung vor der Silikonisierung ist möglich, da der Dichtigkeitstest ohne einen in dem Inneren des medizinischen Hohlkörpers verlagerbaren Stopfen durchgeführt wird. Dies ermöglicht insbesondere eine frühere Dichtigkeitsprüfung im Herstellungsprozess des medizinischen Hohlkörpers, was logistische Vorteile mit sich bringt. Dadurch, dass die Dichtigkeitsprüfung ohne einen Stopfen erfolgen kann, werden die Ergebnisse des Tests nicht durch Losbrech- und/oder Gleitreibungskräfte eines solchen Stopfens beeinflusst.

Die Aufgabe wird schließlich auch gelöst, indem eine Verwendung einer Prüfanordnung nach einem der Ansprüche 1 bis 9 zum Prüfen einer Dichtigkeit eines medizinischen Hohlkörpers bereitgestellt wird. In vorteilhafter Weise kann in Übereinstimmung mit der vorliegenden Offenbarung eine Zug-/Druck-Messeinrichtung verwendet werden, um die Dichtigkeit eines medizinischen Hohlkörpers zu prüfen. Dabei verwirklichen sich insbesondere die bereits genannten Vorteile.

Die Erfindung wird im Folgenden anhand der Zeichnung näher erläutert. Dabei zeigen:
- Figur 1: eine schematische Darstellung eines ersten Ausführungsbeispiels einer Prüfanordnung mit einem Ausführungsbeispiel eines Adapterteils;
- Figur 2: eine schematisierte Schnittdarstellung der Prüfanordnung gemäß Figur 1, und
- Figur 3: eine schematische Darstellung eines zweiten Ausführungsbeispiels einer Prüfanordnung.

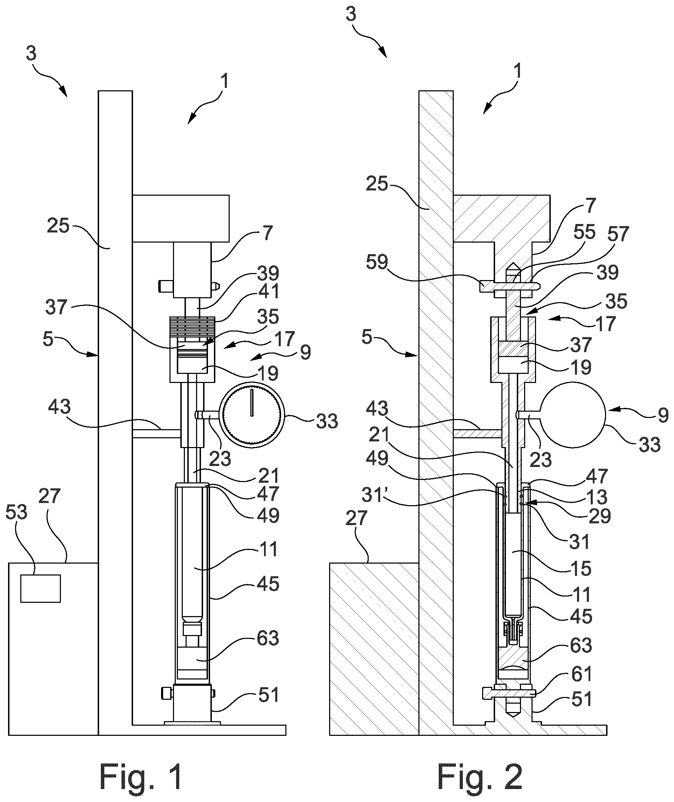

**Fig. 1** zeigt eine Darstellung eines ersten Ausführungsbeispiels einer Prüfanordnung 1, die eine Zug-/Druck-Messeinrichtung 3 aufweist. Die Zug-/Druck-Messeinrichtung 3 weist ihrerseits einen Standkörper 5 und ein relativ zu dem Standkörper 5 axial, das heißt mit Bezug auf Figur 1 in vertikaler Richtung, verlagerbares Wirkende 7 auf. Weiterhin weist die Prüfanordnung 1 ein Adapterteil 9 auf, das eingerichtet ist, um einen medizinischen Hohlkörper 11 mit der Zug-/Druck-Messeinrichtung 3 zu verbinden. Das Adapterteil 9 weist ein erstes, in Figur 2 dargestelltes Verbindungsende 13 auf, das eingerichtet ist, um das Adapterteil 9 fluiddicht mit einem ebenfalls in Figur 2 dargestellten Inneren 15 des medizinischen Hohlkörpers 11 zu verbinden. Das Adapterteil 9 weist außerdem ein zweites Verbindungsende 17 auf. Das zweite Verbindungsende 17 weist eine Druckkammer 19 auf und ist eingerichtet, um das Adapterteil 9 mit der Zug-/Druck-Messeinrichtung 3 wirkzuverbinden, derart, dass ein Druck in der Druckkammer 19 mittels der Zug-/Druck-Messeinrichtung 3 einstellbar ist.

Das Adapterteil 9 weist außerdem einen Hohlkanal 21 auf, der es von der Druckkammer 9 bis zu dem ersten Verbindungsende 13 durchsetzt.

Außerdem weist das hier dargestellte Ausführungsbeispiel des Adapterteils 9 einen Druckmesskanal 23 auf, der zwischen dem ersten Verbindungsende 13 und dem zweiten Verbindungsende 17 aus dem Hohlkanal 21 oder der Druckkammer 19, hier aus dem Hohlkanal 21, abzweigt.

Das zweite Verbindungsende 17 ist mit dem Wirkende 7 der Zug-/Druck-Messeinrichtung 3 derart wirkverbunden, dass ein Druck in der Druckkammer 19 einstellbar ist, indem das Wirkende 7 relativ zu der Druckkammer 19 axial verlagert wird.

Auf diese Weise kann eine genaue Druckeinstellung in der Druckkammer 19 und damit letztlich auch in dem Inneren 15 des medizinischen Hohlkörpers 11 auf einfache Weise mittels der Zug-/Druck-Messeinrichtung 3 erfolgen, wobei diese für eine Dichtigkeitsprüfung des medizinischen Hohlkörpers 11 verwendet werden kann. Somit ist es letztlich möglich, für diese Dichtigkeitsprüfung eine Vorrichtung zu verwenden, die ohnehin zur Prüfung von medizinischen Hohlkörpern 11 eingesetzt wird, nämlich die Zug-/Druck-Messeinrichtung 3, die beispielsweise regelmäßig verwendet wird, um Losreißkräfte oder Verlagerungskräfte von Stopfen in medizinischen Hohlkörpern 11 zu messen.

Der Standkörper 5 weist bevorzugt einen Messturm 25 auf, an dem das Wirkende 7 verlagerbar ist. Hierzu weist die Zug-/Druck-Messeinrichtung 3 vorzugsweise einen Antrieb 27 auf, der eingerichtet ist zur Verlagerung des Wirkendes 7 in axialer Richtung, insbesondere an dem Messturm 25.

Das Wirkende 7 ist bevorzugt als Messelement ausgebildet oder weist ein Messelement auf. Es ist aber auch möglich, dass das Wirkende 7 rein als mechanisches Bauteil oder mechanischer Adapter, insbesondere als mechanisches Verbindungsteil zur Befestigung weiterer Teile, insbesondere von Messanordnungen, beispielsweise Kraftmessdosen, an der Zug-/DruckMesseinrichtung 3 ausgebildet ist.

Dem ersten Verbindungsende 13 ist bevorzugt eine Dichteinrichtung 29 zugeordnet, die eingerichtet ist, um die strömungstechnische Verbindung zwischen dem Hohlkanal 21 und dem Inneren 15 des medizinischen Hohlkörpers 11 abzudichten. Die Dichteinrichtung 29 weist hierzu bevorzugt wenigstens ein Dichtelement, hier konkret zwei Dichtringe 31, 31' auf, die an dem ersten Verbindungsende 13 angeordnet sind, insbesondere das erste Verbindungsende 13 in Umfangsrichtung umgreifen.

Der Hohlkanal 21 ist insbesondere an dem ersten Verbindungsende 13 offen. Insbesondere mündet er in das erste Verbindungsende 13, beziehungsweise er mündet im Bereich des ersten Verbindungsendes 13 in das Innere 15 des medizinischen Hohlkörpers 11, wenn das Adapterteil 9 mit dem medizinischen Hohlkörper 11 verbunden ist.

Mittels der Zug-/Druck-Messeinrichtung 3 und dem Adapterteil 9 kann in dem Inneren 15 des medizinischen Hohlkörpers 11 sowohl ein Überdruck als auch ein Unterdruck - im Vergleich zu einem Umgebungsdruck in einer Umgebung des medizinischen Hohlkörpers 11 - eingestellt werden.

An dem Druckmesskanal 23 ist hier eine Druckmesseinrichtung 33 angeordnet, die insbesondere als Manometer ausgebildet sein kann. Der Druckmesskanal 23 ist bevorzugt eingerichtet zur Verbindung mit der Druckmesseinrichtung 33, beispielsweise indem er ein Gewinde aufweist, in welches die Druckmesseinrichtung 33 eingeschraubt oder an welches die Druckmesseinrichtung 33 angeschraubt werden kann.

Die Druckmesseinrichtung 33 ist mit dem Druckmesskanal 23 wirkverbunden, um einen Druck in dem Druckmesskanal 23 - und damit zugleich in dem Hohlkanal 21, der Druckkammer 19 sowie in dem medizinischen Hohlkörper 11 - zu messen.

Alternativ kann die Druckmesseinrichtung auch mit einem distalen Ende des Hohlkörpers 11 verbunden sein, um den Druck im Inneren des Hohlkörpers 11 zu messen. In diesem Fall kann auch ein Adapterteil 9 verwendet werden, das keinen Druckmesskanal 23 aufweist, oder bei dem der Druckmesskanal 23 beispielsweise mit einem Blindstopfen verschlossen ist.

Unter einem distalen Ende wird hier insbesondere ein Ende des Hohlkörpers 11 verstanden, welches bestimmungsgemäß, bei einer Verwendung des Hohlkörpers 11, einem Patienten und/oder einer Injektionsstelle zu- und vorzugsweise einem Benutzer des Hohlkörpers 11 abgewandt ist. Das andere Ende des Hohlkörpers 11 wird als proximales Ende bezeichnet.

In der Druckkammer 19 ist ein Kolben 35 verlagerbar angeordnet, derart, dass ein Volumen der Druckkammer 19 durch Verlagerung des Kolbens 35 veränderbar ist. Alternativ ist es auch möglich, dass das Adapterteil 9 einen Kolben aufweist, der eingerichtet ist, um in der Druckkammer 19 verlagerbar angeordnet zu werden. Der Kolben 35 muss also insbesondere nicht dauerhaft in der Druckkammer 19 angeordnet sein, insbesondere bedarf es keiner verliersicheren, gegebenenfalls untrennbaren Anordnung des Kolbens in der Druckkammer 19. Es ist aber möglich, dass der Kolben 35 dauerhaft, insbesondere verliersicher, in der Druckkammer 19 angeordnet ist.

Der Kolben 35 weist bevorzugt eine Kolbenscheibe 37 auf. Diese ist vorzugsweise dicht in der Druckkammer 19 angeordnet, vorzugsweise mittels wenigstens eines Dichtrings, den die Kolbenscheibe 37 insbesondere an ihrem Umfang trägt. Es ist gemäß einer Ausgestaltung möglich, dass der Kolben 35 insgesamt als Kolbenscheibe 37 ausgebildet ist. In diesem Fall wirkt bevorzugt das Wirkende 7 direkt auf die Kolbenscheibe 37.

Bei dem hier dargestellten Ausführungsbeispiel weist der Kolben 35 allerdings ein Koppelteil 39 auf, das eingerichtet ist, um mit dem Wirkende 7 mechanisch gekoppelt zu werden. Das Koppelteil 39 ist insbesondere als Koppelschaft ausgebildet. Dieser ist bevorzugt starr, insbesondere mitnehmbar, mit der Koppelscheibe 37 verbunden. Insbesondere ist es möglich, dass das Koppelteil 39 und die Koppelscheibe 37 einstückig, insbesondere materialeinheitlich, miteinander ausgebildet sind und so gemeinsam den Kolben 35 einstückig ausbilden.

Ist das Koppelteil 39 mit dem Wirkende 7 gekoppelt, sind diese insbesondere gemeinsam verlagerbar, sodass der Kolben 35 insgesamt bei einer Verlagerung des Wirkendes 7 mit diesem zusammen verlagert wird. Auf diese Weise kann das Volumen in der Druckkammer 19 durch Verlagerung des Wirkendes 7 und damit zugleich des Kolbens 35 eingestellt werden. Dies führt zugleich zu einer Einstellung des Drucks in dem Hohlkanal 21 sowie in dem medizinischen Hohlkörper 11, wenn dieser mit dem Adapterteil 9 verbunden ist.

Bei dem hier dargestellten Ausführungsbeispiel ist der Druckkammer 19 eine Skala 41 zugeordnet, von der ein momentaner Druck in der Druckkammer 19 abhängig von einer momentanen - axialen - Lage des Kolbens 35 in der Druckkammer 19 abgelesen werden kann. Insbesondere ist die Skala 41 bevorzugt an einem äußeren Umfang der Druckkammer 19 angeordnet, insbesondere auf diesen aufgeklebt oder aufgedruckt, oder in anderer geeigneter Weise ablesbar angebracht. Insbesondere ist bevorzugt eine Wandung der Druckkammer 19 zumindest im Bereich der Skala 41 transparent ausgebildet, sodass die Lage des Kolbens 35 relativ zu der Skala 41 durch die Wandung der Druckkammer 19 beobachtet werden kann.

Alternativ ist es möglich, dass dem Kolben 35 eine entsprechende Skala zugeordnet ist. Die Wandung der Druckkammer 19 weist dann bevorzugt eine Ablesemarkierung auf.

Gemäß einer bevorzugten Ausgestaltung weist der Standkörper 5 ein Befestigungsteil 43 auf, das eingerichtet ist, um das Adapterteil 9 relativ zu dem Standkörper 5 und bevorzugt an dem Standkörper 5 zu befestigen. Es ist aber auch möglich, dass das Adapterteil 9 in besonders einfacher Weise einerseits durch das Wirkende 7 und andererseits durch den medizinischen Hohlkörper 11 gehalten wird.

Der medizinische Hohlkörper 11 ist hier in einem Halter 45 angeordnet, der im Wesentlichen als zylindrischer Hohlkörper ausgebildet ist, in den der medizinische Hohlkörper 11 eingebracht werden kann. Dabei liegt der medizinische Hohlkörper 11 bei diesem Ausführungsbeispiel mit einer Fingerauflage 47 auf einem oberen Rand 49 des Halters 45 auf. Der Halter 45 ist seinerseits an einem Befestigungsfuß 51 der Zug-/Druck-Messeinrichtung 3 festgelegt, der bevorzugt Teil des Standkörpers 5 sein kann.

Das Befestigungsteil 43 kann auch mit dem Halter 45 und/oder dem Befestigungsfuß 51 verbunden sein.

Wie bereits ausgeführt, ist das Wirkende 7 hier mit dem Koppelteil 39 des Kolbens 35 mechanisch gekoppelt. Alternativ ist es aber auch möglich, dass das Wirkende 7 direkt mit der Kolbenscheibe 37 oder mit einer Kolbenscheibe, der kein Koppelteil 39 zugeordnet ist, zug- und/oder druckübertragend verbunden ist. Insbesondere kann das Wirkende 7 direkt auf die Kolbenscheibe 37 wirken. Weiter ist es alternativ möglich, dass das Wirkende 7 selbst in der Druckkammer 19 als Kolben verlagerbar ist.

Die Zug-/Druck-Messeinrichtung 3 weist bevorzugt eine Steuereinrichtung 53 auf, die eingerichtet ist, um mit der Druckmesseinrichtung 33 wirkverbunden zu werden und einen Druck in dem Hohlkanal 21, insbesondere in dem Druckmesskanal 23, - vorzugsweise zeitabhängig - zu erfassen. Die Steuereinrichtung 53 ist weiter bevorzugt eingerichtet, um den - insbesondere zeitabhängig - erfassten Druck auszuwerten. Dabei ist es gemäß einer bevorzugten Ausgestaltung möglich, dass die Steuereinrichtung 53 weiter eingerichtet ist, um das Wirkende 7 in Abhängigkeit von dem erfassten Druck zu verlagern, insbesondere um so den Druck in dem Hohlkanal 21 und letztlich in dem medizinischen Hohlkörper 11 automatisch einstellen zu können, insbesondere auf einen vorbestimmten Druckwert. Es ist auch möglich, dass die Steuereinrichtung 53 gemäß einer bevorzugten Ausgestaltung ausgebildet ist, um den Druck in dem Hohlkanal 21 auf einen vorbestimmten Sollwert zu regeln. Die Steuereinrichtung 53 ist außerdem eingerichtet, um eine Dichtigkeitsprüfung des medizinischen Hohlkörpers 11 automatisiert durchzuführen.

Fig. 2 zeigt eine schematische Schnittdarstellung der Prüfanordnung 1 gemäß Figur 1. Gleiche und funktionsgleiche Elemente sind in allen Figuren mit gleichen Bezugszeichen versehen, sodass insofern stets auf die vorangegangene Beschreibung verwiesen wird.

Das Koppelteil 39 weist hier insbesondere eine Querbohrung 55 als Sicherungsbohrung auf, die in montiertem Zustand mit einer Sicherungsaufnahme 57 des Wirkendes 7 fluchtet. Durch die Querbohrung 55 und die vorzugsweise ebenfalls als Querbohrung ausgebildete Sicherungsaufnahme 57 ist ein Sicherungsstift 59 gesteckt, durch welchen letztlich der Kolben 35 mit dem Wirkende 7 mechanisch verbunden ist.

Auf analoge Weise ist hier auch der Halter 45 mit dem Befestigungsfuß 51 über einen zweiten Sicherungsstift 61 verbunden.

Der medizinische Hohlkörper 11 ist hier an seinem distalen Ende mit einem Verschluss 63 verschlossen, insbesondere fluiddicht verschlossen.

Der medizinische Hohlkörper 11 liegt mit seiner Fingerauflage 47 bevorzugt nicht dicht auf dem oberen Rand 49 des Halters 45 auf, oder der Halter 45 weist wenigstens eine Druckausgleichsbohrung auf, die einen Druckausgleich mit einer äußeren Umgebung des Halters 45 ermöglicht. Somit ist bevorzugt gewährleistet, dass ein Inneres des Halters 45 stets Umgebungsdruck aufweist, was eine möglichst genaue Prüfung der Dichtigkeit des medizinischen Hohlkörpers 11 erlaubt.

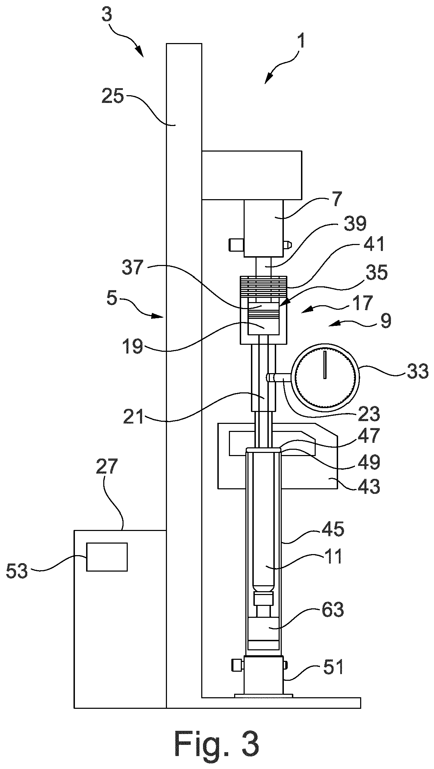

Fig. 3 zeigt eine schematische Darstellung eines zweiten Ausführungsbeispiels einer Prüfanordnung 1. Dabei ist hier das Befestigungsteil 43 mit dem Halter 45 verbunden.

Das im Folgenden mit Bezug auf alle Figuren 1 bis 3 näher erläuterte Verfahren zum Prüfen der Dichtigkeit des medizinischen Hohlkörpers dient insbesondere zur Prüfung der Dichtigkeit des Verschlusses 63, das heißt insbesondere der Verbindung des Verschlusses 63 mit dem medizinischen Hohlkörper 11.

Gemäß einer bevorzugten Ausführungsform wird der medizinische Hohlkörper 11 mithilfe der Prüfanordnung 1 in folgender Weise auf Dichtigkeit geprüft:
Zunächst wird der medizinischen Hohlkörper 11 mit der Zug-/Druck-Messeinrichtung 3 über das Adapterteil 9 verbunden. Der medizinische Hohlkörper 11 ist dabei insbesondere an seinem distalen Ende geschlossen, hier mittels des Verschlusses 63. Es wird nun ein bestimmter Druck in dem Inneren 15 des medizinischen Hohlkörpers 11 durch Verlagern des Wirkendes 7 eingestellt, und ein momentaner Druck in dem Inneren 15 wird über eine bestimmte Prüfzeit erfasst. Diese Druckerfassung erfolgt - bevorzugt zeitabhängig - vorzugsweise mittels der Zug-/Druck-Messeinrichtung 3, insbesondere durch deren Steuereinrichtung 53.

Der derart erfasste Druck wird bevorzugt ausgewertet, besonders bevorzugt ebenfalls durch die Zug-/Druck-Messeinrichtung 3, insbesondere durch deren Steuereinrichtung 53.

Bevorzugt wird das Wirkende 7 nach dem Einstellen des bestimmten Drucks und während der bestimmten Prüfzeit stillgehalten. Es wird dann insbesondere erfasst, ob sich der Druck in dem Inneren 15 verändert, insbesondere ob er zunimmt, insbesondere wenn zuvor ein Unterdruck in dem Inneren 15 eingestellt wurde, oder ob er abnimmt, insbesondere wenn zuvor ein Überdruck in dem Inneren 15 eingestellt wurde. Anhand der erfassten Druckveränderung kann dann auf eine Leckagerate und/oder eine Dichtigkeit des medizinischen Hohlkörpers 11 rückgeschlossen werden.

Es ist aber auch möglich, dass der Druck in dem Inneren 15 über die bestimmte Prüfzeit durch die Zug-/Druck-Messeinrichtung 3, insbesondere die Steuereinrichtung 53, geregelt wird, insbesondere auf einen vorbestimmten Soll-Druckwert. In diesem Fall können die Regelsignale oder Stellwege der Zug-/Druck-Messeinrichtung 3, insbesondere des Wirkendes 7, in Hinblick auf eine Leckagerate und damit letztlich Dichtigkeit des medizinischen Hohlkörpers 11 ausgewertet werden. Insoweit ist offensichtlich, dass ein höherer Nachregelaufwand besteht, wenn der medizinische Hohlkörper 11 undicht ist, beziehungsweise dass der Nachregelaufwand umso höher ist, je höher die Leckagerate ist. Im optimalen Fall, bei verschwindender Leckagerate, bedarf es keiner Nachregelung.

Das Verfahren zum Prüfen der Dichtigkeit des medizinischen Hohlkörpers 11 wird bevorzugt automatisch oder automatisiert durch die Zug-/Druck-Messeinrichtung 3 durchgeführt, insbesondere ohne dass es einen Eingriffs eines Nutzers bedarf.

Der medizinische Hohlkörper 11 wird bevorzugt geprüft, bevor ein medizinischer Stopfen, insbesondere ein Mittel- und/der Endstopfen, in dem medizinischen Hohlkörper 11 angeordnet wird. Der medizinische Hohlkörper 11 kann insbesondere vor oder nach einer Silikonisierung auf Dichtigkeit geprüft werden. Eine solche Silikonisierung erfolgt insbesondere, um die Gleitfähigkeit eines Mittel- und/oder Endstopfens in dem Inneren 15 des medizinischen Hohlkörpers 11 zu erhöhen.

Es wird deutlich, dass gemäß der hier offenbarten technischen Lehre insbesondere eine Zug-/Druck-Messeinrichtung 3 zur Prüfung einer Dichtigkeit eines medizinischen Hohlkörpers 11 verwendet wird.

## Patentansprüche

1. Prüfanordnung (1), mit
- einer Zug-/Druck-Messeinrichtung (3) und mit
- einem Adapterteil (9) zum Verbinden eines medizinischen Hohlkörpers (11) mit der Zug-/Druck-Messeinrichtung (3), wobei
- das Adapterteil (9) aufweist:
∘ ein erstes Verbindungsende (13), das eingerichtet ist zum fluiddichten Verbinden des Adapterteils (9) mit einem Inneren (15) eines medizinischen Hohlkörpers (11), und
∘ ein zweites Verbindungsende (17), das eine Druckkammer (19) aufweist und eingerichtet ist zur Wirkverbindung des Adapterteils (9) mit der Zug-/DruckMesseinrichtung (3), sodass ein Druck in der Druckkammer (19) mittels der Zug-/Druck-Messeinrichtung (3) einstellbar ist, wobei
- ein Hohlkanal (21) das Adapterteil (9) von der Druckkammer (19) bis zu dem ersten Verbindungsende (13) durchsetzt,
**dadurch gekennzeichnet, dass**
- die Zug-/Druck-Messeinrichtung (3) einen Standkörper (5) und ein relativ zu dem Standkörper (5) axial verlagerbares Wirkende (7) aufweist, wobei
- das zweite Verbindungsende (17) des Adapterteils (9) mit dem Wirkende (7) derart wirkverbunden ist, dass ein Druck in der Druckkammer (19) durch axiales Verlagern des Wirkendes (7) relativ zu der Druckkammer (19) einstellbar ist.

2. Prüfanordnung (1) nach Anspruch 1, **gekennzeichnet durch** einen Druckmesskanal (23), der zwischen dem ersten Verbindungsende (13) und dem zweiten Verbindungsende (17) aus dem Hohlkanal (21) oder der Druckkammer (19) abzweigt, wobei vorzugsweise
a) der Druckmesskanal (23) eingerichtet ist zur Anordnung einer Druckmesseinrichtung (33) an dem Druckmesskanal (23), und/oder
b) eine Druckmesseinrichtung (33) mit dem Druckmesskanal (23) wirkverbunden ist, um einen Druck in dem Druckmesskanal (23) zu messen.

3. Prüfanordnung (1) nach einem der vorhergehenden Ansprüche, **dadurch gekennzeichnet, dass**
a) in der Druckkammer (19) ein Kolben (35) verlagerbar angeordnet ist, sodass ein Volumen der Druckkammer (19) durch Verlagern des Kolbens (35) veränderbar ist, oder dass
b) das Adapterteil (9) einen Kolben (35) aufweist, der eingerichtet ist, um in der Druckkammer (19) verlagerbar angeordnet zu werden.

4. Prüfanordnung (1) nach einem der vorhergehenden Ansprüche, **dadurch gekennzeichnet, dass** der Kolben (35)
a) eine Kolbenscheibe (37) aufweist oder als Kolbenscheibe (37) ausgebildet ist, und/oder
b) ein Koppelteil (39) aufweist, das eingerichtet ist, um mit dem Wirkende (7) der Zug-/Druck-Messeinrichtung (3) mechanisch gekoppelt zu werden.

5. Prüfanordnung (1) nach einem der vorhergehenden Ansprüche, **dadurch gekennzeichnet, dass** der Druckkammer (19) und/oder dem Kolben (35) eine Skala (41) zugeordnet ist, von der ein momentaner Druck in der Druckkammer (19) abhängig von einer momentanen Lage des Kolbens (35) in der Druckkammer (19) ablesbar ist.

6. Prüfanordnung (1) nach einem der vorhergehenden Ansprüche, **dadurch gekennzeichnet, dass** der Standkörper (5) ein Befestigungsteil (43) zum Festlegen des Adapterteils (9) relativ zu dem Standkörper (5) aufweist.

7. Prüfanordnung (1) nach einem der vorhergehenden Ansprüche, **dadurch gekennzeichnet, dass** das Wirkende (7)
a) mit einer Kolbenscheibe (37) des Adapterteils (9) zug- und/oder druckübertragend verbunden, oder
b) mit einem Koppelteil (39) des Kolbens (35) mechanisch gekoppelt, oder
c) als Kolben in der Druckkammer (19) verlagerbar angeordnet
ist.

8. Prüfanordnung (1) nach einem der vorhergehenden Ansprüche, **dadurch gekennzeichnet, dass** die Zug-/Druck-Messeinrichtung (3) eine Steuereinrichtung (53) aufweist, die eingerichtet ist, um mit einer Druckmesseinrichtung (33) wirkverbunden zu werden und einen Druck in dem Hohlkanal (21) zu erfassen und vorzugsweise auszuwerten.

9. Prüfanordnung (1) nach einem der vorhergehenden Ansprüche, **dadurch gekennzeichnet, dass** die Steuereinrichtung (53) eingerichtet ist, um eine Dichtigkeitsprüfung eines medizinischen Hohlkörpers (11) automatisiert durchzuführen.

10. Verfahren zum Prüfen einer Dichtigkeit eines medizinischen Hohlkörpers (11) mit einer Prüfanordnung (1) nach einem der vorhergehenden Ansprüche, mit folgenden Schritten:
- Verbinden eines medizinischen Hohlkörpers (11) mit der Zug-/Druck-Messeinrichtung (3) über das Adapterteil (9);
- Einstellen eines bestimmten Drucks in einem Inneren (15) des medizinischen Hohlkörpers (11) durch Verlagern des Wirkendes (7) der Zug-/Druck-Messeinrichtung (3) und
- Erfassen eines momentanen Drucks in dem Inneren (15) über eine bestimmte Prüfzeit.

11. Verfahren nach Anspruch 10, **dadurch gekennzeichnet, dass** das Wirkende (7) nach dem Einstellen des bestimmten Drucks und während der bestimmten Prüfzeit stillgehalten wird.

12. Verfahren nach einem der Ansprüche 10 oder 11, **dadurch gekennzeichnet, dass** das Verfahren durch die Zug-/Druck-Messeinrichtung (3) automatisch durchgeführt wird.

13. Verfahren nach einem der Ansprüche 10 bis 12, **dadurch gekennzeichnet, dass** der medizinische Hohlkörper (11) geprüft wird, bevor ein medizinischer Stopfen in dem medizinischen Hohlkörper (11) angeordnet wird.

14. Verwendung einer Prüfanordnung (1) nach einem der Ansprüche 1 bis 9 zur Prüfung einer Dichtigkeit eines medizinischen Hohlkörpers (11).

## Claims

1. Test assembly (1), comprising
- a tension/pressure measuring device (3) and comprising
- an adapter part (9) for connecting a medical hollow body (11) to the tension/pressure measuring device (3), wherein
- the adapter part (9) comprises:
o a first connecting end (13), which is designed to connect the adapter part (9) to an interior (15) of a medical hollow body (11) in a fluid-tight manner, and
o a second connecting end (17), which has a pressure chamber (19) and is designed to operatively connect the adapter part (9) to the tension/pressure measuring device (3), so that a pressure in the pressure chamber (19) can be adjusted by means of the tension/pressure measuring device (3), wherein
- a hollow channel (21) passes through the adapter part (9) from the pressure chamber (19) to the first connecting end (13),
**characterised in that**
- the tension/pressure measuring device (3) has a standing body (5) and a working end (7), which can be axially displaced relative to the standing body (5), wherein
- the second connecting end (17) of the adapter part (9) is operatively connected to the working end (7) in such a way that a pressure in the pressure chamber (19) can be adjusted by axially displacing the working end (7) relative to the pressure chamber (19).

2. Test assembly (1) according to claim 1, **characterised by** a pressure measuring channel (23), which branches off from the hollow channel (21) or the pressure chamber (19) between the first connecting end (13) and the second connecting end (17), wherein preferably
a) the pressure measuring channel (23) is designed for the arrangement of a pressure measuring device (33) on the pressure measuring channel (23), and/or
b) a pressure measuring device (33) is operatively connected to the pressure measuring channel (23) in order to measure a pressure in the pressure measuring channel (23).

3. Test assembly (1) according to any of the preceding claims, **characterised in that**
a) a piston (35) is displaceably arranged in the pressure chamber (19), so that a volume of the pressure chamber (19) can be changed by displacing the piston (35), or **in that**
b) the adapter part (9) has a piston (35), which is designed to be displaceably arranged in the pressure chamber (19).

4. Test assembly (1) according to any of the preceding claims, **characterised in that** the piston (35)
a) has a piston disk (37) or is designed as a piston disk (37), and/or
b) has a coupling part (39), which is designed to be mechanically coupled to the working end (7) of the tension/pressure measuring device (3).

5. Test assembly (1) according to any of the preceding claims, **characterised in that** the pressure chamber (19) and/or the piston (35) is assigned a scale (41) from which an instantaneous pressure in the pressure chamber (19) can be read depending on an instantaneous position of the piston (35) in the pressure chamber (19).

6. Test assembly (1) according to any of the preceding claims, **characterised in that** the standing body (5) has a fastening part (43) for fixing the adapter part (9) relative to the standing body (5).

7. Test assembly (1) according to any of the preceding claims, **characterised in that** the working end (7) is
a) connected to a piston disk (37) of the adapter part (9) in a tension- and/or pressure-transmitting manner, or
b) mechanically coupled to a coupling part (39) of the piston (35), or
c) arranged displaceably as a piston in the pressure chamber (19).

8. Test assembly (1) according to any of the preceding claims, **characterised in that** the tension/pressure measuring device (3) has a control device (53), which is designed to be operatively connected to a pressure measuring device (33) and to record and preferably evaluate a pressure in the hollow channel (21).

9. Test assembly (1) according to any of the preceding claims, **characterised in that** the control device (53) is designed to carry out a tightness test of a medical hollow body (11) in an automated manner.

10. Method for testing the tightness of a medical hollow body (11) using a test assembly according to any of the preceding claims, comprising the following steps:
- connecting a medical hollow body (11) to the tension/pressure measuring device (3) via the adapter part (9);
- setting a specific pressure in an interior (15) of the medical hollow body (11) by displacing the working end (7) of the tension/pressure measuring device (3) and
- recording an instantaneous pressure in the interior (15) over a specific test time.

11. Method according to claim 10, **characterised in that** the working end (7) is kept still after the specific pressure has been set and during the specific test time.

12. Method according to any of claims 10 or 11, **characterised in that** the method is carried out automatically by the tension/pressure measuring device (3).

13. Method according to any of claims 10 to 12, **characterised in that** the medical hollow body (11) is checked before a medical stopper is arranged in the medical hollow body (11).

14. Use of a test assembly (1) according to any of claims 1 to 9 to test the tightness of a medical hollow body (11).

## Revendications

1. Installation de contrôle (1), avec
- un dispositif de mesure de tension/pression (3) et avec
- un élément adaptateur (9) destiné à la liaison d'un corps creux à usage médical (11) avec le dispositif de mesure de tension/pression (3), dans laquelle
- l'élément adaptateur (9) présente :
o une première extrémité de liaison (13) qui est conçue pour une liaison étanche aux fluides de l'élément adaptateur (9) avec un intérieur (15) du corps creux à usage médical (11), et
o une seconde extrémité de liaison (17) qui présente une chambre de pression (19) et est conçue pour une liaison active de l'élément adaptateur (9) avec le dispositif de mesure de tension/pression (3) de telle sorte qu'une pression dans la chambre de pression (19) peut être réglée au moyen du dispositif de mesure de tension/pression (3), dans laquelle
- un canal creux (21) traverse l'élément adaptateur (9) depuis la chambre de pression (19) jusqu'à la première extrémité de liaison (13),
**caractérisée en ce que**
- le dispositif de mesure de tension/pression (3) présente un corps de support (5) et une extrémité active (7) pouvant être décalée axialement par rapport au corps de support (5), dans laquelle
- la seconde extrémité de liaison (17) de l'élément adaptateur (9) est reliée de manière active à l'extrémité active (7) de telle sorte qu'une pression dans la chambre de pression (19) peut être réglée par le biais d'un décalage axial de l'extrémité active (7) par rapport à la chambre de pression (19).

2. Installation de contrôle (1) selon la revendication 1, **caractérisée par** un canal de mesure de pression (23), qui bifurque entre la première extrémité de liaison (13) et la seconde extrémité de liaison (17) à partir du canal creux (21) ou de la chambre de pression (19), dans laquelle de préférence
a) le canal de mesure de pression (23) est conçu pour une installation d'un dispositif de mesure de pression (33) au niveau du canal de mesure de pression (23), et/ou
b) un dispositif de mesure de pression (33) est relié de manière active au canal de mesure de pression (23) pour mesurer une pression dans le canal de mesure de pression (23).

3. Installation de contrôle (1) selon l'une quelconque des revendications précédentes, **caractérisée en ce que**
a) dans la chambre de pression (19) un piston (35) est disposé de manière déplaçable, de sorte qu'un volume de la chambre de pression (19) peut être modifié par le biais d'un déplacement du piston (35), ou **en ce que**
b) l'élément adaptateur (9) présente un piston (35) qui est conçu pour être disposé de manière déplaçable dans la chambre de pression (19).

4. Installation de contrôle (1) selon l'une quelconque des revendications précédentes, **caractérisée en ce que** le piston (35)
a) présente un disque de piston (37) ou est configuré en tant que disque de piston (37), et/ou
b) présente un élément de couplage (39) qui est conçu pour être couplé mécaniquement à l'extrémité active (7) du dispositif de mesure de tension/pression (3).

5. Installation de contrôle (1) selon l'une quelconque des revendications précédentes, **caractérisée en ce qu'**une échelle (41) est associée à la chambre de pression (19) et/ou au piston (35), par laquelle une pression momentanée dans la chambre de pression (19) peut être lue en fonction d'une position momentanée du piston (35) dans la chambre de pression (19).

6. Installation de contrôle (1) selon l'une quelconque des revendications précédentes, **caractérisée en ce que** le corps de support (5) présente un élément de fixation (43) destiné à la fixation de l'élément adaptateur (9) par rapport au corps de support (5).

7. Installation de contrôle (1) selon l'une quelconque des revendications précédentes, **caractérisée en ce que** l'extrémité active (7)
a) est reliée à un disque de piston (37) de l'élément adaptateur (9) de manière à transmettre une tension et/ou une pression, ou
b) est couplée mécaniquement à un élément de couplage (39) du piston (35), ou
c) est disposée de manière mobile en tant que piston dans la chambre de pression (19).

8. Installation de contrôle (1) selon l'une quelconque des revendications précédentes, **caractérisée en ce que** le dispositif de mesure de tension/pression (3) présente un dispositif de commande qui est conçu pour être relié de manière active à un dispositif de mesure de pression (33) et pour détecter et de préférence évaluer une pression dans le canal creux (21).

9. Installation de contrôle (1) selon l'une quelconque des revendications précédentes, **caractérisée en ce que** le dispositif de commande (53) est conçu pour exécuter de manière automatisée un contrôle d'étanchéité d'un corps creux à usage médical (11).

10. Procédé destiné à contrôler une étanchéité d'un corps creux à usage médical (11) avec une installation de contrôle (1) selon l'une quelconque des revendications précédentes, avec les étapes suivantes :
- liaison d'un corps creux à usage médical (11) avec le dispositif de mesure de tension/pression (3) par le biais de l'élément adaptateur (9) ;
- réglage d'une pression déterminée dans un intérieur (15) du corps creux à usage médical (11) par le biais d'un déplacement de l'extrémité active (7) du dispositif de mesure de tension/pression (3) et
- détection d'une pression momentanée dans l'intérieur (15) pendant un temps de contrôle déterminé.

11. Procédé selon la revendication 10, **caractérisé en ce que** l'extrémité active (7) est maintenue en veille après le réglage de la pression déterminée et pendant le temps de contrôle déterminé.

12. Procédé selon l'une quelconque des revendications 10 ou 11, **caractérisé en ce que** le procédé est exécuté automatiquement par le biais du dispositif de mesure de tension/pression (3).

13. Procédé selon l'une quelconque des revendications 10 à 12, **caractérisé en ce que** le corps creux à usage médical (11) est contrôlé avant qu'un bouchon à usage médical soit disposé dans le corps creux à usage médical (11).

14. Utilisation d'un dispositif de contrôle (1) selon l'une quelconque des revendications 1 à 9 destiné au contrôle d'une étanchéité d'un corps creux à usage médical (11).
